# EUROPEAN PATENT APPLICATION

(11) **EP 1 314 778 A1**
(43) Date of publication of application: **28.05.2003**
(21) Application number: 02025318.3
(22) Date of filing: 13.11.2002
(51) Int. Cl.: C12G 1/032

(54) **Wine making apparatus and method**

(30) Priority: 26.11.2001 IT PC20010037
(71) Applicant: CMB di Cassi Angelo & C. S.n.c., 29010 Pianello V.T. PC (IT)
(72) Inventor: Corrada, Valter, 29010 Pianello V.T.-PC (IT)
(74) Representative: La Ciura, Salvatore

(57) **Abstract**

A wine-making method comprising the following stages:
- transfer of part of the must (10) from a fermenter (2) to an external tank (14)
- hermetic sealing of the said tank until a pre-set pressure is reached in it
- opening of means (9,22) designed to place the said tank in communication with the upper part of the wine-making unit to transfer the must from the said tank to the said upper part of the wine-making unit
- closing of the said communication between the said tank and the said wine-making unit and opening of a second communication (7) between the said tank and the lower part of the wine-making unit to transfer the pressurised gas still present in the said tank into the wine-making unit, below the cap (11) formed by the marc, to disintegrate the said cap.

The invention relates also to an installation for performing said method.

## Description

The present invention relates to a wine-making installation designed in particular to exploit existing wine-making units, which are completed by suitable equipment designed to exploit the gas developed by the must during fermentation so as to cause the must to moisten the marc and disintegrate the cap, without performing excessive mechanical actions but ensuring that the marc is fully immersed in the liquid and that the must in contact with the marc is continually changed.

The invention also relates to the corresponding method, which involves transferring part of the must to a pressure tank, exploiting the gas developed by the must in the said tank so that it pushes the must from the tank in such a way as to wet the marc from above, and then directing the pressurised gas from the tank into the fermenter to disintegrate the cap from below and allow the entire surface of the marc to come into contact with the liquid.

One of the most important stages of wine-making is fermentation which, in accordance with the latest techniques, takes place in special tanks called "fermenters" in which the must and marc are left to complete fermentation for a period so that the liquid can extract the tannins, dyes and other substances needed to give the wine its final organoleptic properties from the marc.

Many of the fermenters currently used consist of tanks into which the must and marc are introduced; these tanks are equipped with devices that pump part of the must into the upper part of the tank to wet from above the marc, which tends to rise to the surface and form a floating layer or "cap".

Cracks and passages through which the liquid passes are formed in the cap, but the liquid is unable to wet all the marc thoroughly.

Moreover, this system requires pumps and pumping-over equipment which increase the cost of the installation.

Recently, installations have been developed which exploit the pressure of the gas developed during fermentation to force the must to wet the marc from above.

In accordance with one of these known systems, the upper part of the wine-making unit contains a tank into which part of the must present in the wine-making unit is pumped; this must then spills onto the marc to break up the cap and perform what is known as "flooding".

This system is effective, but exerts an excessively energetic action on the marc, also extracting bitter tannins and substances which are preferably only present in wine in very limited quantities.

Fermenters which use mechanical apparatus to move and stir the marc mechanically are also known, but these systems are also too energetic.

European patent application number 0.959.127, filed by the present applicant, relates to a fermenter which exploits the pressure of the gas to transfer part of the must into a chamber in the upper part of the unit and cause it to spill onto the marc, and then discharges the pressure into the fermenter so that the must rises from below onto the mark and floods it.

This system, which includes a totally closed fermenter, is effective without exerting an excessively violent action on the marc.

In view of the efficacy of the system, it would be helpful if it could always be used, but this is impossible with current fermenters.

To solve this problem, the present invention offers a method and the corresponding installation which produce the desired result with no need to replace the fermenters, merely by completing the installation with a pressure tank connected to the fermenters via suitable pipes fitted with valve elements.

Basically, the method involves transferring part of the must from the fermenter to the pressure tank, closing the passage, and when the gas developed in the tank has reached a sufficient pressure, opening a passage between the tank and the upper part of the fermenter so that the pressure forces the must to wet the marc from above.

Next, the method involves closing the said passage and opening a passage between the tank and the lower part of the fermenter, to allow the pressurised gas to flow through the must and strike the cap of marc from below, to disintegrate and flood it.

This invention will now be described in detail, by way of example but not of limitation, by reference to the annexed figures wherein:
- figure 1 schematically illustrates a wine-making installation in accordance with the invention, in side view

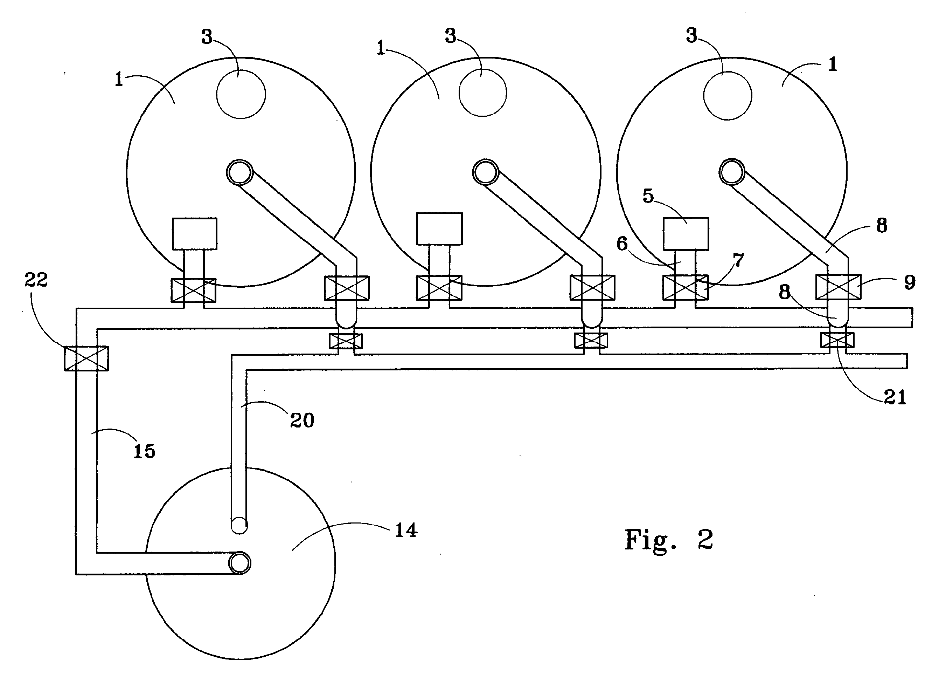

- figure 2 is the schematic plan view of a wine-making installation in accordance with the invention.

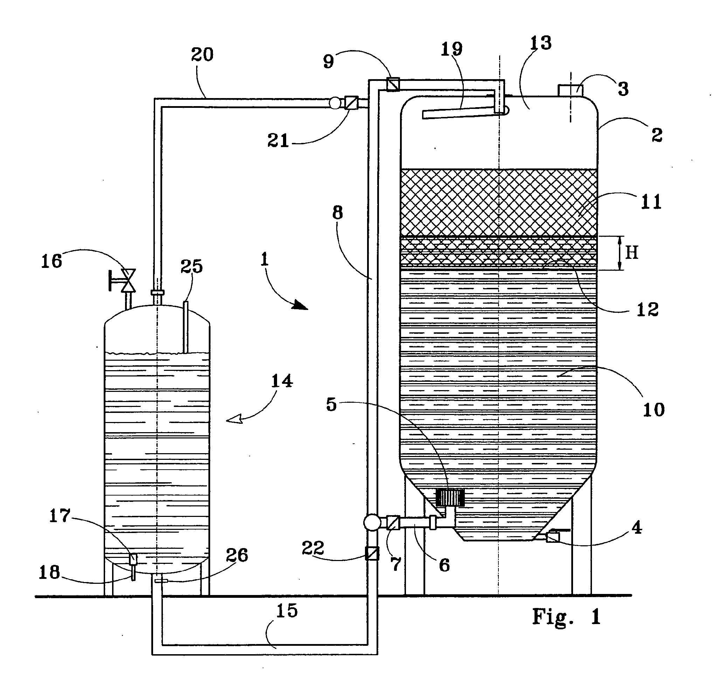

In figure 1, number 1 indicates a fermenter of known type, substantially constituted by a tank 2 which communicates with the exterior at the top via an aperture 3 and is fitted with a product withdrawal pipe 4 at the bottom.

The lower part of the tank also contains a grid or filter 5 to which a pipe 6 leads, an opening and closing valve 7 being fitted to the said pipe.

A second pipe 8, to which a similar opening and closing valve 9 is fitted, connects pipe 6 to the upper part of tank 2.

The interior of the tank, which is illustrated in the figure during the wine-making stage, is divided into four zones: the first zone, shown as 10, is filled with must; no. 11 indicates the cap formed by the marc which rises to the surface, while no. 12 indicates the part of the cap, of height "H", which always remains immersed in the must.

No. 13 indicates the upper part of the wine-making unit, constituted by a chamber to which the must used to wet the marc is transferred.

In accordance with the invention, the installation comprising wine-making unit 1 is completed by adding a pressure tank 14, connected to pipes 6 and 8 by pipes 15 and 20.

The upper part of tank 14 contains a relief valve 16, while the lower part may contain a filter candle 17 or the like connected to a pipe 18, which is connected in turn to devices designed to input pressurised gas into tank 14 if necessary.

Tank 14 also contains a probe 25 connected in a known way to the devices that command valves 7, 16 and 22, under the control of the PLC. Probe 25 controls the opening of valve 16 when the level of the liquid in tank 14 is low so as to allow easy filling, and closes valve 16 when the level of the liquid in tank 14 reaches a pre-set height, to allow the inner pressure to increase as a result of the development of carbon dioxide during fermentation.

A probe 26 on the bottom of tank 14 is connected to the other valves 9, 22, 7 and 21 to control their opening and closing, as will be described below.

Possibly, but not necessarily, the upper part of fermenter 1 may contain a rotating arm 19 which distributes the must designed to wet the marc over the entire surface of the cap.

The wine-making installation operates as follows.

The must is loaded into fermenter 1, and the marc gradually moves upwards to form cap 11, which floats on the must, partly immersed in must to depth H.

The carbon dioxide developed by the must normally exits through hatch 3 and is dispersed into the atmosphere.

The procedure used to disintegrate the cap and wet the marc is as follows.

Valves 9 and 21 are closed and valves 7 and 22 are opened to place tank 2 in communication with pressure tank 14.

Probe 25 does not yet detect any liquid, and consequently keeps valve 16 open. Part of the must is then conveyed into tank 14.

This situation is schematically illustrated in figure 1.

When the liquid in tank 14 reaches the pre-set level, signalled by probe 25, the said probe controls the closing of valves 7 and 16.

As fermentation proceeds, the gas developed by the must in tank 14 increases the pressure in the said tank. When this pressure reaches a pre-set value, valve 9 on pipe 8 which connects the bottom of the fermenter to upper chamber 13 opens.

The pressure of the gas then forces the must in tank 14 to rise along pipes 15 and 8 into chamber 13, from which it spills onto cap 11, wetting the marc and the cap, which moves downwards when wet. A rotating arm 19 might be fitted to help direct the flow of must from tank 14 over the entire surface of the cap.

At the end of this stage, when all the must has risen into chamber 13, valves 9 and 22 close and valves 7 and 21 open.

The residual pressure in the tank then forces the gas along pipe 20, causing it to exit from filter 5 into the must present in the fermenter.

Here, the gas forms a large number of bubbles which move upwards, breaking up the cap from beneath and thus causing the must sprayed on the cap from above to wet all the marc thoroughly, after which the marc is dispersed in the liquid, returns to the surface and forms a new cap, whereupon the cycle begins again.

At the end, any residual pressure in tank 14 can be released through valve 16; if necessary, a pressurised gas such as oxygen can also be introduced into the must present in tank 14, via pipe 18 and filter candle 17.

In this way pumping-over (1) of the must can be performed by exploiting the pressure of the gas that develops during fermentation to wet the marc and disintegrate the cap, with no need to exert mechanical actions on it.

The system could be successfully implemented with existing fermenters, as it would only be necessary to complete the installation by adding pressure tank 14 and the corresponding connections with valves.

## Claims

1. Wine-making method, **characterised in that** it comprises at least one marc flooding stage in which the marc is wet with the must from above and the cap is then disintegrated from below.

2. Method as claimed in claim 1, **characterised in that** it involves the transfer of part of the must from the lower part of the wine-making unit to the upper part to wet the marc, and subsequent input of gas into the lower part of the wine-making unit to create a quantity of bubbles able to disintegrate the cap of marc.

3. Method as claimed in claim 2, **characterised in that** the said transfer of must from the lower to the upper part of the wine-making unit is performed by exploiting the gas developed by the must during fermentation, and that the gas developed by the must is subsequently used to disintegrate the cap of marc.

4. Method as claimed in the preceding claims, **characterised in that** it involves the following stages:
• transfer of part of the must from the fermenter to an external tank
• hermetic sealing of the said tank until a pre-set pressure is reached in it
• opening of means designed to place the said tank in communication with the upper part of the wine-making unit to transfer the must from the said tank to the said upper part of the wine-making unit
• closing of the said communication between the said tank and the said wine-making unit and opening of a second communication between the said tank and the lower part of the wine-making unit to transfer the pressurised gas still present in the said tank into the wine-making unit, below the cap formed by the marc, to disintegrate the said cap.

5. Wine-making installation for performing a method according to one or more of the preceding claims, of the type comprising a tank designed to contain the must and marc, at least one pipe which connects the lower part of the said tank with the upper part thereof, and means designed to place the lower part of the said tank in communication with a pipe for the introduction of a pressurised gas, the said installation being **characterised in that** it includes a sealed tank connected via a first pipe (6) to the lower part of the wine-making unit and via a second pipe (8) to the upper part of the said wine-making unit, valve-type opening and closing means designed to open and cut off the communication between the said pressure tank and the said wine-making unit being fitted on the said pipes (6 and 8).

6. Wine-making installation for implementation of the method claimed in claims 1 to 4, **characterised in that** it comprises:
• a wine-making unit
• a pressure tank connected to the said wine-making unit;
• means designed to allow the transfer of the must from the said wine-making unit to the said tank
• means designed to transfer the must from the said tank to the upper part of the said wine-making unit
• means designed to transfer the pressurised gas present in the said tank from the said tank to the lower part of the said wine-making unit.

7. Wine-making installation for implementation of the method claimed in claim 6, **characterised in that** it comprises:
• a wine-making unit
• a pressure tank connected to the said wine-making unit;
• pipes fitted with valve means which connect the said wine-making unit to the said tank
• pipes fitted with valve means which connect the said tank to the upper part of the said wine-making unit
• control and drive devices for the said valve means.

8. Wine-making installation for implementation of the method claimed in claim 6 or 7, **characterised in that** it comprises:
• means designed to detect the level of the must in the said tank (14)
• means designed to open the said connecting valves between the lower part of the said wine-making unit and the said tank (14) when the level of the liquid in the said tank is below a pre-set value
• means designed to close the said connecting valves between the lower part of the said wine-making unit and the said tank (14) when the level of the liquid in the said tank reaches a pre-set value
• means designed to open the said connecting valves between the said tank (14) and the upper part of the said wine-making unit when the pressure in the said tank reaches a pre-set value
• means designed to open the said connecting valves between the said tank (14) and the lower part of the said wine-making unit when the pressure in the said tank (14) has been transferred to the upper part of the wine-making unit.
